# EUROPEAN PATENT APPLICATION

(11) **EP 3 657 075 A1**
(43) Date of publication of application: **27.05.2020**
(21) Application number: 18207805.5
(22) Date of filing: 22.11.2018
(51) Int. Cl.: F24C 7/08, G06F 3/0486, H04M 1/725, A47L 15/00

(54) **CONTROL SYSTEM FOR CONTROLLING AT LEAST ONE APPLIANCE**

(71) Applicant: ELECTROLUX APPLIANCES AKTIEBOLAG, 105 45 Stockholm (SE)
(72) Inventor: MEYER, Gerd, 91541 Rothenburg ob der Tauber (DE)
(74) Representative: Electrolux Group Patents

(57) **Abstract**

The present invention relates to a control system for controlling at least one appliance, in particular at least on domestic appliance. The control system comprises at least one local control device (10) for controlling the appliance. The local control device (10) is stationary arranged within or beside the appliance. The control system comprises at least one remote control device (12) for controlling the appliance. The local control device (10) and the remote control device (12) are alternatingly activatable by the user. The local control device (10) and the remote control device (12) are deactivated by touching an icon and sliding said icon (20) out of a touch sensitive area (14, 22) of the local control device (10) and the remote control device (12), respectively.

## Description

The present invention relates to a control system for controlling at least one appliance, in particular at least one domestic appliance. Further, the present invention relates to an appliance, in particular a domestic appliance. Moreover, the present invention relates to a set of appliances, in particular domestic appliances.

An appliance, in particular a domestic appliance, is often controllable by a local control device and a remote control device. The change between the control by the local control device and by the remote control device requires several steps performed by the user. Usually, the change must be confirmed by an OK button on the local control device or on remote control device or on both of them. This procedure seems to be uncomfortable to the user.

It is an object of the present invention to provide a control system for controlling at least one appliance, which allows a simple changeover between a local control device and a remote control device.

The object is achieved by the control system for controlling at least one appliance according to claim 1.

According to the present invention a control system for controlling at least one appliance, in particular at least on domestic appliance, is provided, wherein:
- the control system comprises at least one local control device for controlling the appliance,
- the local control device is stationary arranged within or beside the appliance,
- the control system comprises at least one remote control device for controlling the appliance,
- the local control device and the remote control device are alternatingly activatable by the user, and
- the local control device and the remote control device are deactivated by touching an icon and sliding said icon out of a touch sensitive area of the local control device and the remote control device, respectively.

The control system according to the present invention allows the changeover between the local control device and the remote control device by the user in a simple way. By touching and sliding the icon, the user can change between the local control device and the remote control device by one step.

Preferably, the local control device is an integrated part of the appliance.

Further, the local control device may include at least one display with a touch sensitive area, wherein preferably the icon is represented on said touch sensitive area.

For example, the remote control device is a smartphone, a tablet, a notebook or a laptop.

In particular, the remote control device includes at least one touch screen, wherein preferably the icon is represented on said touch screen.

Further, the remote control device may include at least one tab, wherein preferably said tab is represented on the touch screen.

Moreover, the remote control device may include two or more tabs, wherein each tab corresponds with one appliance. For example, said tabs may be represented by different colours.

In particular, an activated tab is represented in the foreground of the touch screen, while at least one deactivated tab is represented in the background of the touch screen.

Preferably, only the tabs of those appliances are represented on the touch screen, which appliances are controllable by the remote control device.

Advantageously, the tabs of an appliance vanish, if the local control device has been activated for said appliance.

For example, the icon is represented by a ring, a cross, a star, a button symbol, a light bulb symbol, a hand symbol or a finger symbol. Alternatively, the icon may be represented by another noticeable symbol.

In particular, the icon is represented in a luminous paint, for example in a red, yellow or orange colour. Moreover, the icon may be blinking or rotating. By these ways, a noticeable icon may be obtained.

Further, the present invention relates to an appliance, in particular a domestic appliance, wherein the appliance is controllable or controlled by the control system described above.

Moreover, the present invention relates to a set of appliances, in particular domestic appliances, wherein the appliances are controllable or controlled by the control system mentioned above.

Novel and inventive features of the present invention are set forth in the appended claims.

The present invention will be described in further detail with reference to the drawings, in which
FIG 1 illustrates a schematic front view of an activated local control device of a control system according to a preferred embodiment of the present invention,
FIG 2 illustrates a schematic front view of an activated remote control device of the control system according to the preferred embodiment of the present invention,
FIG 3 illustrates a schematic front view of a deactivated remote control device of the control system according to the preferred embodiment of the present invention,
FIG 4 illustrates a further schematic front view of the activated remote control device of the control system according to the preferred embodiment of the present invention,
FIG 5 illustrates a further schematic front view of the activated remote control device of the control system according to the preferred embodiment of the present invention, and
FIG 6 illustrates a further schematic front view of the activated remote control device of the control system according to the preferred embodiment of the present invention.

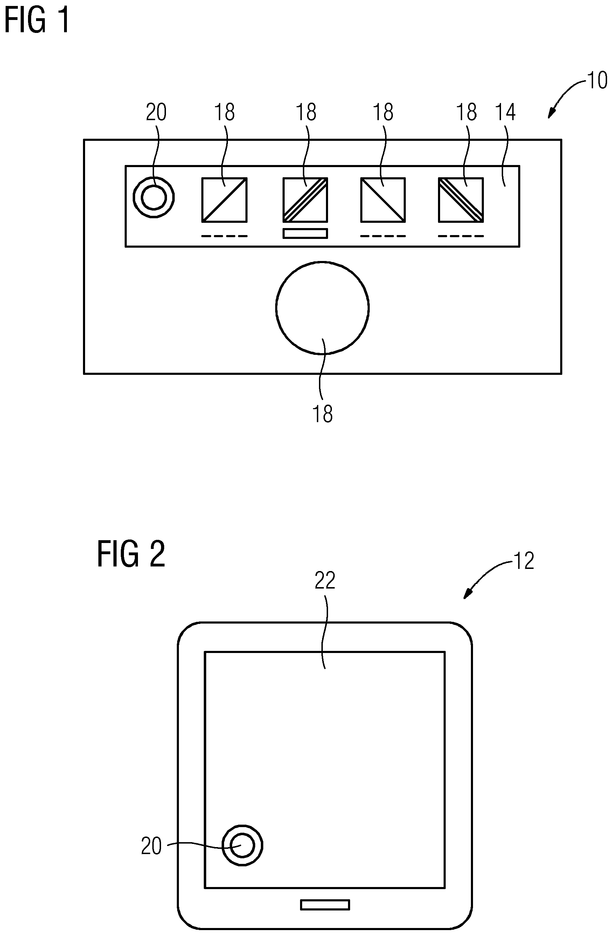

FIG 1 illustrates a schematic front view of an activated local control device 10 of a control system according to a preferred embodiment of the present invention.

The control system is provided for controlling an appliance, in particular a domestic appliance. The control system comprises said local control device 10 and at least one remote control device 12. The local control device 10 is either an integrated part of the appliance or stationary arranged beside said appliance. The activated local control device 10 is able to control the appliance. However, if the local control device 10 is deactivated, then the appliance is controllable by another control device.

The local control device 10 includes a display 14 and a control element 16. A plurality of symbols 18 is represented on the display 14. Each symbol 18 corresponds with a function of the appliance. Said functions are selectable by the control element 16. In this example, the control element 16 is a rotary knob. In general, the local control device 10 may include arbitrary kinds of control elements 16.

An icon 20 is represented on the display 14. The presence of said icon 20 indicates the active status of the local control device 10. The icon 20 is arranged within a touch sensitive area of the display 14. The local control device 10 can be deactivated by touching the icon 20 and sliding said icon 20 out of the display 14 by the user.

FIG 2 illustrates a schematic front view of an activated remote control device 12 of the control system according to the preferred embodiment of the present invention. In this example, the remote control device 12 is a smart phone. In general, the remote control device 12 may be an arbitrary suitable mobile device, e.g. a tablet, notebook or laptop.

The remote control device 12 includes a touch screen 22. The icon 20 is represented on the touch screen 22, when the remote control device 12 is activated. The remote control device 12 can be deactivated by touching the icon 20 and sliding said icon 20 out of the touch screen 22 by the user.

With the control system according to the preferred embodiment of the present invention either the local control device 10 or the remote control device 12 is activated at the same. The appliance can be controlled by only one control device 10 or 12 at the same time.

When the icon 20 is touched and slid out of the display 14 of the local control device 10 by the user, then said local control device 10 is deactivated, while the remote control device 12 is activated. In a similar way, when the icon 20 is touched and slid out of the touch screen 22 of the remote control device 12 by the user, then said remote control device 12 is deactivated, while the local control device 10 is activated.

Thus, the local control device 10 and the remote control device 12 are alternatingly activated by moving the icon 20 between the display 14 of the local control device 10 and the touch screen 22 of the remote control device 12 by the user. When the icon 20 is slid out of the display 14 of the local control device 10, then said icon 20 appears automatically on the touch screen 22 of the remote control device 12. In a similar way, when the icon 20 is slid out of the touch screen 22 of the remote control device 12, then said icon 20 appears automatically on the display 14 of the local control device 10.

The icon 20 indicates, which of the local control device 10 and the remote control device 12 is activated and provided for controlling the appliance.

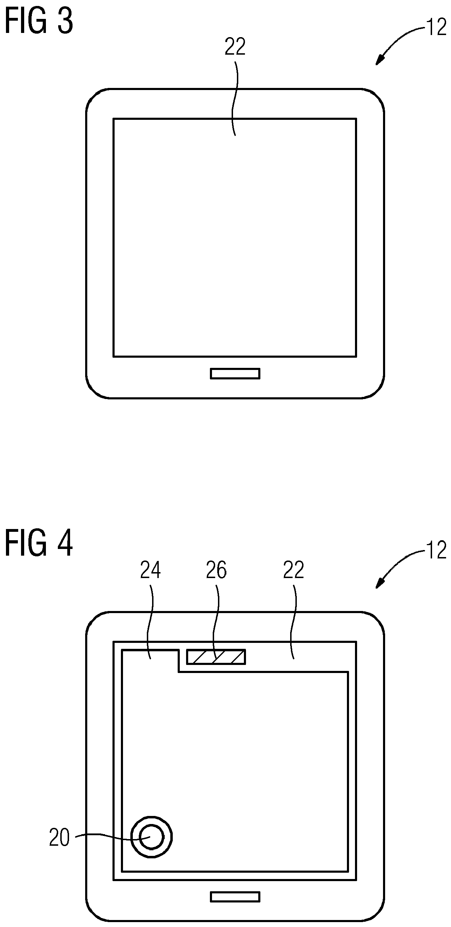

FIG 3 illustrates a schematic front view of a deactivated remote control device 12 of the control system according to the preferred embodiment of the present invention.

Since the remote control device 12 is deactivated, the icon 20 does not appear on the touch screen 22. At the same time, said icon 20 appears on the display 14 of the local control device 10. When the remote control device 12 is deactivated, then said local control device 10 is activated.

FIG 4 illustrates a further schematic front view of the activated remote control device 12 of the control system according to the preferred embodiment of the present invention. In FIG 4 the remote control device 12 is provided for controlling two appliances, in particular two domestic appliances.

A first tab 24 and a second tab 26 are indicated on the touch screen 22. The first tab 24 is activated and shown in the foreground of the touch screen 22, while the second tab 26 is deactivated and shown in the background of the touch screen 22. The first tab 24 corresponds with a first appliance, while the second tab 26 corresponds with a second appliance.

The icon 20 indicates that the remote control device 12 is activated. The first tab 24 in the foreground indicates that the first appliance is controllable.

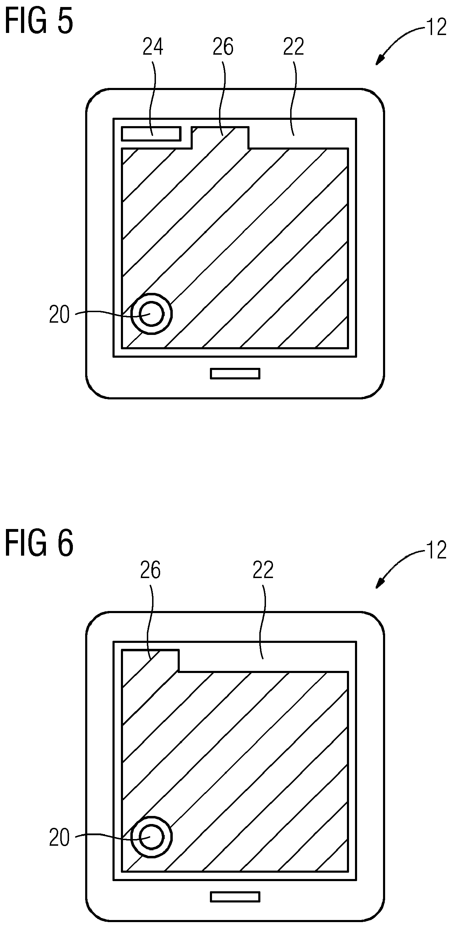

FIG 5 illustrates a further schematic front view of the activated remote control device 12 of the control system according to the preferred embodiment of the present invention.

The first tab 24 and the second tab 26 are indicated on the touch screen 22. In FIG 5, the second tab 26 is activated and shown in the foreground of the touch screen 22, while the first tab 26 is deactivated and shown in the background of the touch screen 22. The first tab 24 corresponds with a first appliance, while the second tab 26 corresponds with a second appliance.

The icon 20 indicates that the remote control device 12 is activated. The second tab 26 in the foreground indicates that the second appliance is controllable. When the first tab 24 and the second tab 26 are indicated on the touch screen 22, then the first and second appliances are only controllable by the remote control device 12.

FIG 6 illustrates a further schematic front view of the activated remote control device 12 of the control system according to the preferred embodiment of the present invention.

Only the second tab 26 and the icon 20 are indicated on the touch screen 22. The second appliance is controllable by the remote control device 12, while the first appliance is controllable by the local control device 10.

For example, the constellation shown in FIG 6 is a result of the constellation of FIG 4. When the icon 20 in FIG 4 is slid out of the touch screen 22, then the first appliance is controllable by the local control device 10 and the first tab 24 vanishes from the touch screen 22, while the second tab 26 remains on said touch screen 22.

The control system of the present invention allows a changeover between the local control device 10 and the remote control device 12 by the user in a simple way. By touching and sliding the icon 20, the user can change between the local control device 10 and the remote control device 12 by one step.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope or spirit of the invention. All such changes and modifications are intended to be included within the scope of the invention as defined by the appended claims.

### List of reference numerals

- 10: local control device
- 12: remote control device
- 14: display
- 16: control element
- 18: symbol
- 20: icon
- 22: touch screen
- 24: first tab
- 26: second tab

## Claims

1. A control system for controlling at least one appliance, in particular at least on domestic appliance, wherein:
- the control system comprises at least one local control device (10) for controlling the appliance,
- the local control device (10) is stationary arranged within or beside the appliance,
- the control system comprises at least one remote control device (12) for controlling the appliance,
- the local control device (10) and the remote control device (12) are alternatingly activatable by the user, and
- the local control device (10) and the remote control device (12) are deactivated by touching an icon and sliding said icon (20) out of a touch sensitive area (14, 22) of the local control device (10) and the remote control device (12), respectively.

2. The control system according to claim 1,
**characterised in that**
the local control device (10) is an integrated part of the appliance.

3. The control system according to claim 1 or 2,
**characterised in that**
the local control device (10) includes at least one display (14) with a touch sensitive area, wherein preferably the icon (20) is represented on said touch sensitive area.

4. The control system according to any one of the preceding claims,
**characterised in that**
the remote control device (12) is a smartphone, a tablet, a notebook or a laptop.

5. The control system according to any one of the preceding claims,
**characterised in that**
the remote control device (12) includes at least one touch screen (22), wherein preferably the icon (20) is represented on said touch screen (22).

6. The control system according to any one of the preceding claims,
**characterised in that**
the remote control device (12) includes at least one tab (24, 26), wherein preferably said tab (24, 26) is represented on the touch screen (22).

7. The control system according to claim 6,
**characterised in that**
the remote control device (12) includes two or more tabs (24, 26), wherein each tab (24, 26) corresponds with one appliance.

8. The control system according to claim 6 or 7,
**characterised in that**
an activated tab (24, 26) is represented in the foreground of the touch screen (22), while at least one deactivated tab (24, 26) is represented in the background of the touch screen (22).

9. The control system according to any one of the claims 6 to 8,
**characterised in that**
only the tabs (24, 26) of those appliances are represented on the touch screen (22), which appliances are controllable by the remote control device (12).

10. The control system according to any one of the claims 6 to 9,
**characterised in that**
the tabs (24, 26) of an appliance vanish, if the local control device (10) has been activated for said appliance.

11. The control system according to any one of the preceding claims,
**characterised in that**
the icon (20) is represented by a ring, a cross, a star, a button symbol, a light bulb symbol, a hand symbol or a finger symbol.

12. The control system according to any one of the preceding claims,
**characterised in that**
the icon (20) is represented in a luminous paint, for example in a red, yellow or orange colour.

13. The control system according to any one of the preceding claims,
**characterised in that**
the icon (20) is blinking or rotating.

14. An appliance, in particular a domestic appliance,
**characterised in that**
the appliance is controllable or controlled by the control system according to any one of the preceding claims.

15. A set of appliances, in particular domestic appliances,
**characterised in that**
the appliances are controllable or controlled by the control system according to any one of the claims 1 to 13.
